## Europäisches Patentamt

## European Patent Office

## Office européen des brevets

(19)

(11) Veröffentlichungsnummer: **0 062 287**
**B1**

(12) # EUROPÄISCHE PATENTSCHRIFT

(45) Veröffentlichungstag der Patentschrift:
24.07.85

(51) Int. Cl.⁴: **G 02 B 6/40**

(21) Anmeldenummer: **82102679.6**

(22) Anmeldetag: **30.03.82**

(54) **Leitungsstecker für parallele optische Datenübertragung.**

(30) Priorität: **01.04.81 DE 3113168**

(43) Veröffentlichungstag der Anmeldung:
**13.10.82 Patentblatt 82/41**

(45) Bekanntmachung des Hinweises auf die Patenterteilung:
**24.07.85 Patentblatt 85/30**

(84) Benannte Vertragsstaaten:
**FR GB IT NL**

(56) Entgegenhaltungen:
**DE - A - 1 790 336**
**DE - A - 2 013 884**
**DE - A - 2 824 009**
**FR - A - 973 130**
**GB - A - 979 826**
**US - A - 2 891 132**

**ELECTRONICS, Band 49, Nr. 18, 2. September 1976, Seiten 94-99, New York, USA H. SCHMID: "Fiber-optic data transmission: a practical, low-cost technology" ELEKTROTECHNIK, Band 55, Nr. 11, 14. Juni 1973, Seite 5, Berlin, DE. "Neues Kabelsteckergehäuse-Programm"**

(73) Patentinhaber: **Siemens Aktiengesellschaft, Berlin und München Wittelsbacherplatz 2, D-8000 München 2 (DE)**

(72) Erfinder: **Hoffmann, Richard, Emil-Geis-Strasse 12, D-8000 München 70 (DE)**

## Beschreibung

Die Erfindung betrifft einen Leitungsstecker für ein Lichtwellenleiterkabel zur parallelen optischen Mehrkanalübertragung von als elektrische Signale anfallende Daten, mit einem Steckergehäuse, das einerseits mindestens eine Einführungsöffnung für das Lichtwellenleiterkabel aufweist, und aus dem andererseits stiftförmige Steckanschlüsse herausführen, wobei der Leitungsstecker in einen Steckbereich und einen Kabelzuführungsbereich unterteilt ist.

In den meisten Datenübertragungsanlagen wird bisher das Standard-Interface, bei dem bis zu 38 Signale parallel übertragen werden müssen, mit elektrischen Leitern aufgebaut. Immer mehr werden jedoch auch Lichtwellenleiter in der Datentechnik verwendet. Bekannte Ausführungen haben aber den Nachteil, dass die Ankoppelelemente Glasfaser/Diode meistens als Stecker mit optischer Trennung ausgeführt sind. Um bei mehreren Steckungen reproduzierbare Übertragungswerte zu erhalten, sind diese Teile technisch sehr aufwendig und umfangreich. («Electronics», 49 (1976), Seite 94–99).

Aufgabe der vorliegenden Erfindung ist es daher, einen Leitungsstecker für parallele optische Datenübertragung mit optischem Kabeleingang und elektrischem Steckausgang zu schaffen.

Zur Lösung dieser Aufgabe wird der Leitungsstecker derart ausgebildet, dass die Steckanschlüsse elektrische Kontaktstifte sind, dass das Steckergehäuse ein Bodenteil mit Seitenwänden und einen auf diese aufrastbaren Deckel aufweist, dass im Inneren des Steckergehäuses mehrere für die optoelektrische Umsetzung ausgebildete Module angeordnet sind, dass der Steckbereich bei Anblick auf das Bodenteil rechteckförmig, der Kabelzuführungsbereich dagegen trapezförmig auslaufend ausgebildet ist, dass Einführungsöffnungen (a, b, c) an den drei freien Trapezseiten des Kabelzuführungsbereichs vorgesehen sind, wobei in den Öffnungen bedarfsweise zum Steckerinneren zu sich aufweitende Einführungstrichter mit rundem Querschnitt einsetzbar sind, dass die Module für die optoelektrische Umsetzung in dem rechteckigen Steckbereich nebeneinander angeordnet und so ausgebildet sind, dass sie auf ihrer Vorderseite unmittelbar die Kontaktstifte für die elektrische Steckung des Steckers enthalten und auf ihrer Rückseite jeweils mit den einzelnen Leitern des Lichtwellenleiterkanals verbindbar sind.

Durch diese Massnahmen erhält man einen Leitungsstecker für optoelektrische Datenübertragung, bei dem die Steckung auf der elektrischen Seite vorgenommen wird. Durch die Aneinanderreihung von Einzelsteckmoduln für die optoelektrische Umsetzung kann ein Steckerfeld geschaffen werden, das den bisherigen elektrischen Steckern angepasst ist, so dass das bisherige elektrische Interface durch ein optoelektronisches ohne grossen Umrüstaufwand ausgetauscht werden kann. Die Lichtwellenleiterzuführung kann je nach Platzbedarf von hinten, von oben oder von unten erfolgen.

Bildet man dabei den Leitungsstecker derart aus, dass die an den schrägen Seiten des hinteren Bodenteils einsetzbaren Einführtrichter zu den Steckerseitenwänden hin mit einer verlängerten, den minimal zulässigen Biegeradius der einzelnen Lichtwellenleiter nicht unterschreitenden Trichterseitenwand versehen sind, so ist stets sichergestellt, dass der kleinste zulässige Biegeradius des einzelnen Lichtwellenleiters nicht unterschritten wird, so dass die Übertragungseigenschaften des Lichtwellenleiters auch bei längerem Gebrauch erhalten bleiben.

Je nach Verwendungsfall können die Einführtrichter in den unterschiedlichen Einführöffnungen eingerastet werden. Hierfür sieht die Erfindung vor, dass die Einführtrichter mit einem Flansch versehen sind, der in Ausnehmungen des Bodenteils einsetzbar ist. Zur Abstützung der verlängernden Seitenwand der seitlichen Einführtrichter ist ein senkrecht zum Bodenteil verlaufender Zapfen vorgesehen, der sich sowohl am Bodenteil als auch an dem später aufbringbaren Deckel abstützt und dadurch entlastend wirkt.

Eine Zugentlastung für das angeschlossene Lichtwellenleiterkabel kann dadurch gebildet werden, dass der die Kabelseele bildende Stahldraht mittels einer Öse an einen Zapfen in der Steckermitte eingehängt wird. Eine andere Möglichkeit besteht darin, dass das Lichtwellenleiterkabel nach Einführen in den Einführtrichter mit diesen vergossen wird.

Das Bodenteil kann ausserdem Aussparungen enthalten, in die am Deckel senkrecht zu ihm angebrachte Fortsätze mit Nasen einrasten.

Um den Einführtrichter auch nach vorne zu fixieren, sind im Bodenteil hinter den Ausnehmungen für den Flansch der seitlichen Einführtrichter je ein Steg vorgesehen, der mit dem Flansch und dem verlängerten Trichterseitenteil in Eingriff steht.

Die nicht benützten Öffnungen für die Einführtrichter können mit Abdeckteilen verschlossen werden.

Zum Schutz der Kontaktstifte im Steckerteil des Leitungssteckers kann das Bodenteil und der Deckel so weit verlängert sein, dass sie einen Schutzkragen um die Kontaktstifte bilden.

Um beispielsweise unterschiedliche Längen ausgleichen zu können, kann neben dem optoelektronischen Steckmodul mindestens ein weiteres Modul zur Aufnahme einer Kompensationsschaltung vorgesehen sein. Im einfachsten Fall handelt es sich dabei um einen entsprechend dimensionierten Ohmschen Widerstand.

Um auch bei Platzmangel den Leitungsstecker ziehen zu können, sind neben der Öffnung für den mittleren Einführtrichter im Bodenteil Löcher zum Ansatz eines Ziehwerkzeuges vorgesehen.

Zum Einrasten und Verriegeln des Leitungssteckers mit der im allgemeinen auf einer Leiterplatte befindlichen Fassung sind an der Unterseite Nasen vorgesehen, die in Aussparungen 5 der zugehörigen Fassung einrasten.

Anhand der Ausführungsbeispiele nach den Figuren 1 bis 4 wird die Erfindung näher erläutert. Dabei zeigen die

Fig. 1 zwei untereinander angeordnete Leitungsstecker, von denen der eine teils im Schnitt, teils in Draufsicht ohne Deckel gezeichnet ist,

Fig. 2 einen Querschnitt des Leitungssteckers im Bereich der für die Deckeleinrastung vorgesehenen Ausnehmungen,

Fig. 3 eine Rückansicht des Leitungssteckers und

Fig. 4 ein Einsatzbeispiel bei einer in einer Datenverarbeitungsanlage befindlichen elektrischen Leiterplatte.

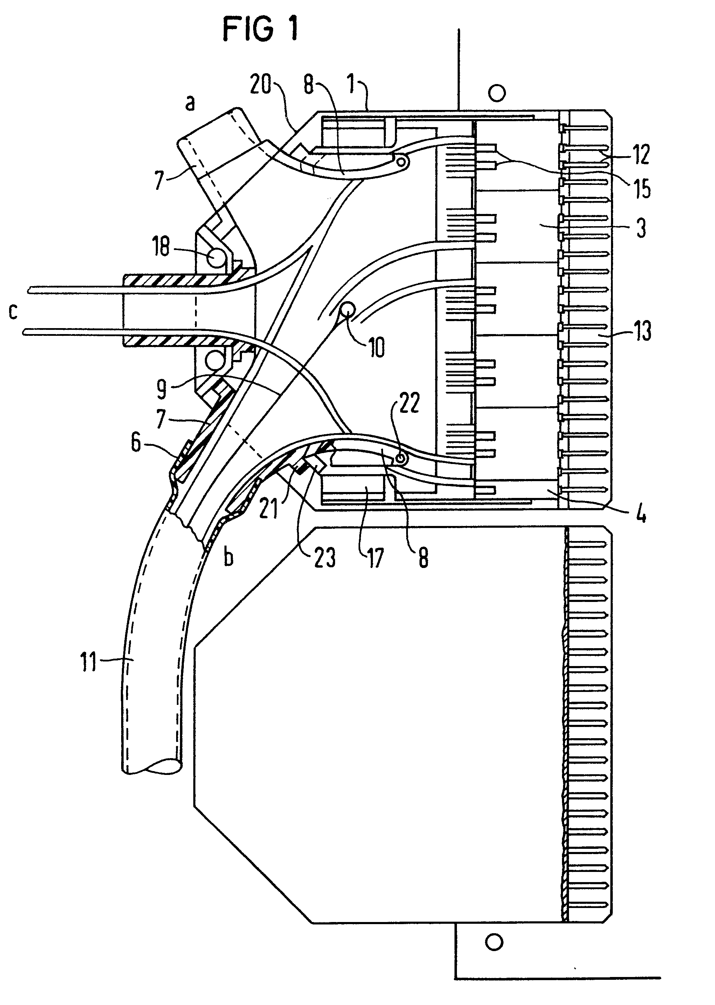

Der Leitungsstecker in der Fig. 1 besteht aus einem Bodenteil mit Seitenwänden 1, einem Deckel 2, einem Einführtrichter 7, den Umsetzerbausteinen 3 und evtl. einem Kompensationsbaustein 4. Ausserdem bringt er die Verriegelung 5 mit oder jeweils zugehörigen Flachbaugruppe und die Zugentlastung für das Glasfaserkabel mit. Es besteht die Möglichkeit, das Kabel nach oben a, unten b oder nach hinten c wegzuführen. Im Stecker ist Raum genug, um die Einzelfasern unter Einhaltung des Mindestbiegeradius an die Umsetzerbausteine anschliessen zu können. Die Kabeleinführung und Abfangung des Kabelmantels 6 geschieht durch Einführtrichter 7. Der Einführtrichter für die Kabelausführung nach oben und unten ist das gleiche Bauteil und kann auf Umschlag verwendet werden. Die jeweils ersten Einzelfasern liegen an einer verlängerten Seitenwand 8 des Trichters an; auf diese Weise wird eine Unterschreitung des Mindestbiegeradius vermieden. Die eigentliche Zugentlastung des zwanzigadrigen Kabels erfolgt dadurch, dass der Stahldraht 9, der die Seele des Kabels bildet, mittels einer Öse an einem Zapfen 10 in der Steckermitte eingehängt wird oder die Einzelfeder im Trichter eingegossen wird.

Als Umsetzerbaustein kommen hauptsächlich Quadromodul-Bausteine, wie sie in der deutschen Patentschrift 3 116 259 beschrieben sind, in Frage. Wie aus dieser Patentschrift hervorgeht, sind in einem Umsetzerbaustein 4 Sendedioden bzw. 4 Empfangsdioden mit Verstärkerschaltung enthalten. Stirnseitig sind 8 Anschlussbeinchen, die als Kontaktstifte 12 ausgebildet sind, zweireihig in einem vorgegebenen Raster angeordnet. Im Leitungsstecker können maximal fünf Modulbausteine und ein Kompensationsbaustein mit zwei Anschlussstiften 12 angeordnet werden, so dass sich die Stifte zu einer 2 × 21 = 42-poligen Stiftleiste 12 zusammenfügen.

Der Boden und der Deckel des Leitungssteckers sind so weit vorgezogen, dass die Stifte zwischen diesen Schutzwänden 13 liegen und vor einer Beschädigung, besonders bei gezogenem Stecker, geschützt sind. Die Federleiste 14 auf der Flachbaugruppe wird auf Stützen angeordnet. Damit der Quadromodulbaustein und der Kompensationsbaustein beim Steck- und Ziehvorgang ihre Lage im Stecker nicht verändern können, sind sie mit Haltenasen 15 ausgestattet, welche in Aussparungen eingreifen, die im Bodenteil und im Deckel im Rasterteilungsabstand vorhanden sind. Der Deckel des Leitungssteckers hat zwei zur Deckelfläche rechtwinkelige Fortsätze mit Nasen 16, welche beim Anbringen des Deckels in entsprechenden Aussparungen des Bodenteils 17 verrasten. Zum Abnehmen werden die Fortsätze entgegen ihrer Federwirkung nach innen gedrückt, bis die formschlüssige Verbindung nicht mehr besteht.

Zum Ziehen des Leitungssteckers muss bei verschiedenen Einbaufällen ein Werkzeug verwendet werden. Diese wird in zwei Löcher 18 am Hinterende des Leitungssteckers eingesetzt. Es dient gewissermassen als Steckerverlängerung.

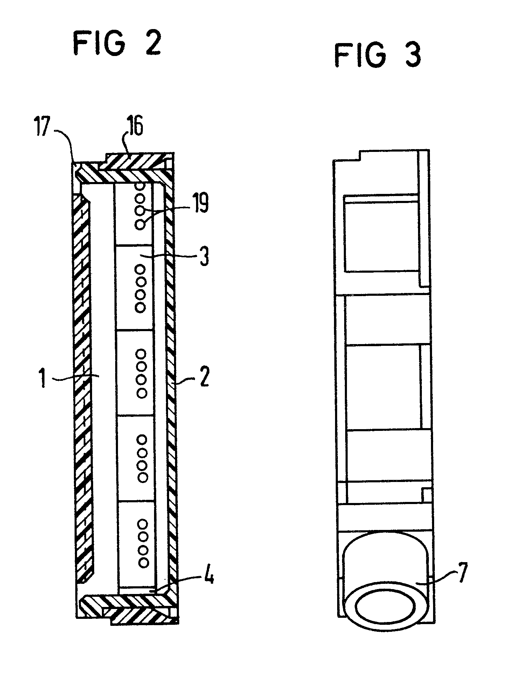

Fig. 2 zeigt einen Schnitt etwa in der Höhe der Ausnehmungen 17 durch den Leitungsstecker mit aufgerastertem Deckel 2. Am Deckel befinden sich senkrechte Ansätze 16, die in entsprechende Nasen auslaufen, die in Ausnehmungen 17 des Bodenteiles 1 eingreifen. An die fünf optoelektrischen Steckmoduln 3 sind die Einzelfasern 19 des Lichtwellenleiterkabels 11 geführt.

In der Draufsicht nach Fig. 3 ist eine Ausführung zu ersehen, bei der das Lichtleiterwellenkabel 7 von unten her an den Stecker herangeführt wird. Die mittlere und obere Öffnung sind frei und können entsprechend mit einem Abdeckteil abgedeckt werden.

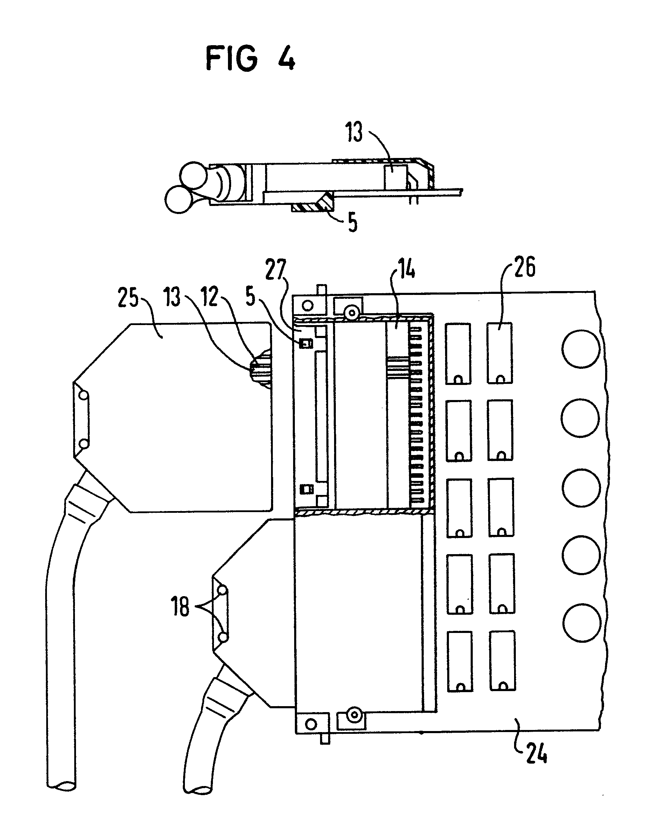

Fig. 4 zeigt einen konkreten Einsatzfall. Die Leiterplatte 24, auf der integrierte Bauteile 25 aufgebracht sind, enthält zwei Federleisten 14 mit entsprechenden Luftabdeckwinkeln 26. Auf den Luftabdeckwinkeln 26 befinden sich Aussparungen 5, in die im Bodenteil 1 des Leitungssteckers 27 in der Zeichnung nicht sichtbare Rastnasen beim Einstecken des Leitungssteckers 27 in die Fassung eingreifen. Der untere Leitungsstecker ist im eingesteckten und der obere Leitungsstecker 27 im gezogenen Zustand gezeichnet. Oberhalb der Fig. 4 ist der Querschnitt eines im gesteckten Zustand befindlichen Steckers zu sehen, wobei die Rastnasen 5 am Bodenteil 1 des Leitungssteckers 27 deutlich sichtbar sind.

**Patentansprüche**

1. Leitungsstecker für ein Lichtwellenleiterkabel zur parallelen optischen Mehrkanalübertragung von als elektrische Signale anfallenden Daten, mit einem Steckergehäuse, das einerseits mindestens eine Einführungsöffnung für das Lichtwellenleiterkabel aufweist, und aus dem andererseits stiftförmige Steckanschlüsse herausführen, wobei der Leitungsstecker in einen Steckbereich und einen Kabelzuführungsbereich unterteilt ist, dadurch gekennzeichnet, dass die Steckanschlüsse elektrische Kontaktstifte (12) sind, dass das Steckergehäuse ein Bodenteil mit Seitenwänden (1) und einen auf diese aufrastbaren Deckel (2) aufweist, dass im Inneren des Steckergehäuses mehrere für die optoelektrische Umsetzung ausgebildete Module (3) angeordnet sind, dass der Steckbereich bei Aufblick auf das Bodenteil rechteckförmig, der Kabelzuführungsbereich dagegen trapezförmig auslaufend ausgebildet ist, dass Einführungsöffnungen (a, b, c) an den drei freien Trapezseiten des Kabelzuführungsbereichs vorgesehen sind, wobei in die Öffnungen bedarfsweise zum Steckerinneren zu sich aufweitende Einführungtrichter (7) mit rundem Querschnitt einsetzbar sind, dass die Module (3) für die optoelektrische Umsetzung in dem rechteckigen Steckbereich nebeneinander angeordnet und so ausgebildet sind, dass sie auf ihrer Vorderseite unmittelbar die Kontaktstifte (12) für die elektrische Steckung des Steckers enthalten und auf ihrer Rückseite jeweils mit den einzelnen Leitern (19) des Lichtwellenleiterkabels verbindbar sind.

2. Leitungsstecker nach Anspruch 1, dadurch gekennzeichnet, dass die an den schrägen Seitenwänden (20) des Bodenteils (1) einsetzbaren Einführtrichter (7) zu den in Steckrichtung verlaufenden Steckerseitenwänden hin mit einer verlängerten, den minimal zulässigen Biegeradius der einzelnen Lichtwellenleiter (19) nicht unterschreitenden Trichterseitenwand (8) versehen sind.

3. Leitungsstecker nach einem der vorhergehenden Ansprüche, dadurch gekennzeichnet, dass die Einführtrichter (7) mit einem Flansch (21) versehen sind, der in Ausnehmungen des Bodenteils (1) einsetzbar ist.

4. Leitungsstecker nach einem der Ansprüche 2 und 3, dadurch gekennzeichnet, dass die verlängerte Seitenwand (8) der seitlichen Einführtrichter (7) mit einem senkrecht zum Boden des Bodenteils (1) verlaufenden Zapfen (22) versehen ist.

5. Leitungsstecker nach einem der vorhergehenden Ansprüche, dadurch gekennzeichnet, dass ein die Kabelseele bildender Stahldraht (9) mittels einer Öse an einen Zapfen (10) in der Steckermitte eingehängt wird.

6. Leitungsstecker nach einem der Ansprüche 1 bis 4, dadurch gekennzeichnet, dass das in den Einführtrichter (7) eingeführte Lichtwellenleiterkabel mit diesem vergossen ist.

7. Leitungsstecker nach einem der vorhergehenden Ansprüche, dadurch gekennzeichnet, dass im Bodenteil (17) Aussparungen vorgesehen sind, in die am Deckel (2) senkrecht zu ihm angebrachte Fortsätze mit Nasen (10) einrasten.

8. Leitungsstecker nach einem der vorhergehenden Ansprüche, dadurch gekennzeichnet, dass im Bodenteil (1) hinter den Ausnehmungen für den Flansch (21) der seitlichen Einführtrichter (7) je ein Stift (23) vorgesehen ist, der mit dem Flansch (21) und dem verlängernden Trichterseitenteil (8) in Eingriff ist.

9. Leitungsstecker nach einem der vorhergehenden Ansprüche, dadurch gekennzeichnet, dass nicht benützte Öffnungen für die Einführtrichter (7) mit einem Abdeckteil verschliessbar sind.

10. Leitungsstecker nach einem der vorhergehenden Ansprüche, dadurch gekennzeichnet, dass das Bodenteil (1) und der Deckel (2) im Steckbereich so weit verlängert sind, dass sie um die Kontaktstifte (12) der optoelektrischen Steckmoduln (3) einen Schutzkragen (13) bilden.

11. Leitungsstecker nach einem der vorhergehenden Ansprüche, dadurch gekennzeichnet, dass neben dem optoelektrischen Steckmodul (3) mindestens ein weiteres Modul (4) zur Aufnahme einer Kompensationsschaltung vorgesehen ist.

12. Leitungsstecker nach einem der vorhergehenden Ansprüche, dadurch gekennzeichnet, dass neben der Öffnung für den mittleren Einführtrichter im Bodenteil (1) Löcher zum Ansatz eines Ziehwerkzeugs vorgesehen sind.

13. Leitungsstecker nach einem der vorhergehenden Ansprüche, dadurch gekennzeichnet, dass das Bodenteil (1) an seiner Unterseite im Steckbereich Nasen aufweist, die in entsprechende Nuten der Steckerfassung (5) einrasten.

## Claims

1. A conductor plug for a light waveguide cable for the parallel optical multi-channel transmission of data produced as electrical signals, comprising a plug housing which, on the one hand, has at least one lead-in opening for the light waveguide cable and from which, on the other hand, pin-shaped plug terminals lead out, the conductor plug being sub-divided into a plug region and a cable supply region, characterised in that the plug terminals consist of electrical contact pins (12); that the plug housing has a base having side walls (1), and a cover (2) which can be locked on to these side walls; that a plurality of modules (3) designed for opto-electrical conversion are arranged within the plug housing; that, looking up at the base, the plug region is rectangular whilst the cable supply region is trapezoidal; that lead-in openings (A, B, C) are provided on the three free trapezoidal sides of the cable supply region, into which openings lead-in funnels (7) which have a circular cross-section and which widen in the direction of the interior of the plug can be inserted when necessary; that the modules (3) for opto-electrical conversion are arranged one beside another in the rectangular plug region and are so designed that on their front face they directly contain the contact pins (12) for the electrical connection of the plug and on their rear face they can each be connected to the individual conductors (19) of the waveguide cable.

2. A conductor plug as claimed in Claim 1, characterised in that the inlet funnels (7), which can be inserted at the sloping side walls (20) of the base (1), are provided, towards the plug side walls which extend in the plug-in direction with an extended funnel side wall (8) which does not fall below the minimum permissible bending radius of the individual light waveguides (19).

3. A conductor plug as claimed in one of the preceding Claims, characterised in that the inlet funnels (7) are provided with a flange (21) which can be inserted into recesses in the base (1).

4. A conductor plug as claimed in one of Claims 2 and 3, characterised in that the extended side wall (8) of the lateral inlet funnels (7) is provided with a peg (22) which extends at right angles to the floor of the base (1).

5. A conductor plug as claimed in one of the preceding Claims, characterised in that a steel wire (9) which forms the cable core is suspended by means of a loop from a peg (10) in the centre of the plug.

6. A conductor plug as claimed in one of Claims 1 to 4, characterised in that the light waveguide cable which is inserted into the inlet funnel (7) is cast thereto.

7. A conductor plug as claimed in one of the preceding Claims, characterised in that the base (17) is provided with openings into which engage projections having noses (10), arranged on the cover (2) at right angles thereto.

8. A conductor plug as claimed in one of the preceding Claims, characterised in that in the base (1) behind the recesses for the flange (21) of the lateral inlet funnels (7) there is in each case provided a pin (23) which engages with the flange (21) and the extended side part (8) of the funnel.

9. A conductor plug as claimed in one of the preceding Claims, characterised in that openings for the inlet funnels (7) not in use can be closed by a cover member.

10. A conductor plug as claimed in one of the preceding Claims, characterised in that the base (1) and the cover (2) are extended in the plug zone to such an extent that they form a protective collar (13) around the contact pins (12) of the optoelectrical plug modules (3).

11. A conductor plug as claimed in one of the preceding Claims, characterised in that beside the opto-electrical plug modules (3), there is provided at least one further module (4) which serves to accommodate a compensating circuit.

12. A conductor plug as claimed in one of the preceding Claims, characterised in that beside the opening for the central inlet funnel in the base (1), holes are provided for the attachment of a pulling tool.

13. A conductor plug as claimed in one of the preceding Claims, characterised in that on its underside in the plug region, the base (1) has noses which engage into corresponding grooves of the plug socket (5).

## Revendications

1. Connecteur de ligne pour un câble à fibres optiques servant à la transmission optique en parallèle, dans plusieurs canaux, de données présentes sous la forme de signaux électriques, comportant un boîtier qui d'une part possède au moins une ouverture d'introduction pour le câble à fibres optiques et d'où ressortent d'autre part des prises débrochables en forme de broches, le connecteur de ligne étant subdivisé en une partie d'enfichage et en une partie d'introduction du câble, caractérisé par le fait que les prises débrochables sont des broches de contact électriques (12), que le boîtier du connecteur comporte une partie de base munie de parois latérales (1) et un couvercle (2) pouvant être fixé par encliquetage sur ces parois, que plusieurs modules (3) conçus pour réaliser la conversion optoélectrique sont disposées à l'intérieur du boîtier cu connecteur, que la partie enfichable est réalisée avec une forme rectangulaire, lorsque l'on regarde la partie de base, tandis que la partie d'introduction du câble se termine par une extrémité de forme trapézoïdale, qu'il est prévu, sur les trois côtés libres de la partie d'introduction du câble, des ouvertures d'introduction (a, b, c) dans lesquelles il est possible d'insérer en cas de besoin de entonnoirs d'introduction (7) qui s'élargissent vers l'intérieur du connecteur et possèdent une section transversale ciruclaire, que les modules (3) utilisés pour la conversion optoélectrique sont disposés côte-à-côte dans la partie rectangulaire d'enfichage et sont réalisés en sorte que, directement, sur leur face avant, ils contiennent les broches de contact (12) prévues pour le raccordement électrique du connecteur et que, sur leur face arrière, ils peuvent être reliés respectivement aux différents conducteurs (19) du câble à fibres optiques.

2. Connecteur de ligne suivant la revendication 1, caractérisé par le fait que les entonnoirs d'introduction (7), qui peuvent être insérés dans les parois latérales obliques (20) de la partie de base (1) sont munies, en direction des parois latérales du connecteur qui s'étendent suivant la direction d'enfichage, d'une paroi latérale prolongée (8) dont le rayon de courbure n'est pas inférieur au rayon de courbure admissible des différentes fibres optiques (19).

3. Connecteur de ligne suivant l'une des revendications précédentes, caractérisé par le fait que les entonnoirs d'introduction (7) sont munis d'une bride (21) qui peut être insérée dans des évidements de la partie de base (1).

4. Connecteur de ligne suivant l'une des revendications 2 et 3, caractérisé par le fait que la paroi latérale prolongée (8) de l'entonnoir latéral d'introduction (7) est munie d'un téton (22) perpendiculaire au fond de la partie de base (1).

5. Connecteur de ligne suivant l'une des revendications précédentes, caractérisé par le fait qu'un fil d'acier (9) constituant l'âme du câble est accroché au moyen d'un œillet à un téton (10) situé au centre du connecteur.

6. Connecteur de ligne suivant l'une des revendications 1 à 4, caractérisé par le fait que le câble à fibres optiques, introduit dans l'entonnoir d'introduction (7), est scellé à ce dernier.

7. Connecteur de ligne suivant l'une des revendications précédentes, caractérisé par le fait qu'il est prévu dans la partie de base (17), des évidements dans lesquels des appendices saillants disposés sur le couvercle (2), perpendiculairement à ce dernier, s'encliquètent au moyen d'ergots (10).

8. Connecteur de ligne suivant l'une des revendications précédentes, caractérisé par le fait que dans la partie de base (1) il est prévu, en arrière des évidements prévus pour la bride (21) des entonnoirs latériaux d'introduction (7), des barrettes (23) qui sont en prise avec la bride (21) et avec la partie latérale prolongée (8) de l'entonnoir.

9. Connecteur de ligne suivant l'une des revendications précédentes, caractérisé par le fait que les orifices non utilisés pour les entonnoirs d'introduction (7) peuvent être obturés par un organe de fermeture.

10. Connecteur de ligne suivant l'une des revendications précédentes, caractérisé par le fait que la partie de base (1) et le couvercle (2) sont prolongés suffisamment dans la partie d'enfichage pour qu'ils forment un collet de protection (13) autour des broches de contact (12) du module enfichable optoélectrique (3).

11. Connecteur de ligne suivant l'une des revendications précécentes, caractérisé par le fait qu'outre le module enfichable optoélectrique (3), il est prévu au moins un autre module (4) servant à recevoir un circuit de compensation.

12. Connecteur de ligne suivant l'une des revendications précédentes caractérisé en ce que, en dehors de l'ouverture prévue pour l'entonnoir médian d'introduction, il est prévu dans la partie de base (1), des trous pour la mise en place d'un outil d'extraction.

13. Connecteur de ligne suivant l'une des revendications précédentes, caractérisé par le fait que la partie de base (1) comporte, sur sa face inférieure et dans la partie d'enfichage, des becs qui s'encliquètent dans des rainures correspondantes de la monture (5) du connecteur.

# FIG 1

# FIG 2

# FIG 3

# FIG 4